# EUROPEAN PATENT APPLICATION

(11) **EP 4 206 168 A1**
(43) Date of publication of application: **05.07.2023**
(21) Application number: 21218449.3
(22) Date of filing: 31.12.2021
(51) Int. Cl.: C05B 7/00, C05C 9/00, C05F 1/00, C05F 11/02, C05G 5/20, C05G 5/30, C05G 5/40, C05D 9/02, C05F 11/10, C05G 3/40, A01N 25/28

(54) **NANO BIO-CARRIER WITH PLANT ADDITIVES COATED ON CHEMICAL FERTILIZERS**

(71) Applicant: SABIC Global Technologies B.V., 4612 PX Bergen op Zoom (NL)
(72) Inventor: MARKANDAY, Meghna, Bangalore (IN); HEGDE, Ravi, Bangalore (IN); BELLA, Ridha, Riyadh (SA); ABDALLAH, Radwan, Riyadh (SA)
(74) Representative: Dehns

(57) **Abstract**

Disclosed herein are fertilizer compositions comprising a fertilizer composition comprising a nitrogen or phosphorus-based fertilizer; and a plant additive encapsulated by a polysaccharide polymer forming an encapsulated plant additive composite, wherein the plant additive comprises a macronutrient, a micronutrient, a biostimulant, a plant growth hormone, or a combination thereof, and wherein the encapsulated plant additive composite encapsulates the nitrogen or phosphorus-based fertilizer.

## Description

### NANO BIO-CARRIER WITH PLANT ADDITIVES COATED ON CHEMICAL FERTILIZERS

### TECHNICAL FIELD

The present disclosure relates to fertilizer compositions, more specifically to fertilizer compositions including a chemical fertilizer and a nutrient-enriched polysaccharide coating.

### BACKGROUND

Plants or crops require certain essential nutrients to maintain health and foster growth. Nutrient levels outside the amount required for regular plant function may be a deficiency or toxicity and can result in a decline in plant health. Nutrient deficiency may refer to an inadequate amount of a given essential nutrient so that requirements of a growing plant are not met. Toxicity may occur when a given nutrient is in excess of a plant's needs, thereby decreasing plant growth or plant quality.

Modern agriculture relies heavily on chemical fertilizers to increase yield, particularly as more food is needed from the same amount of land. However, nutrients available in bulk chemical fertilizers may not be fully accessible to a plant. Moreover, the utilization of most of the macronutrients may be very low because of their inversion to insoluble form in soil. Generally, crops utilize less than half of the chemical fertilizers applied thereto. The remaining, unabsorbed minerals may leach into the soil and become fixed or contribute to air/soil pollution. There is a tremendous food production pressure on the sector as nutritional deficiencies in human populations are attributed to less nutritious food and a low dietary intake of fruits and vegetables. There remains a need in the art for a nutrient delivery system for plants that provides a slow or measured release to optimize plant absorption and utilization, while reducing negative environmental effects. Nanofertilizers may promote sustainable agriculture and increase crop productivity by increasing the nutrient use efficiency of the crops. These and other shortcomings are addressed by aspects of the present disclosure.

### BRIEF DESCRIPTION OF FIGURES

The accompanying figures, which are incorporated in and constitute a part of this specification, illustrate several aspects and together with the description serve to explain the principles of the disclosure.

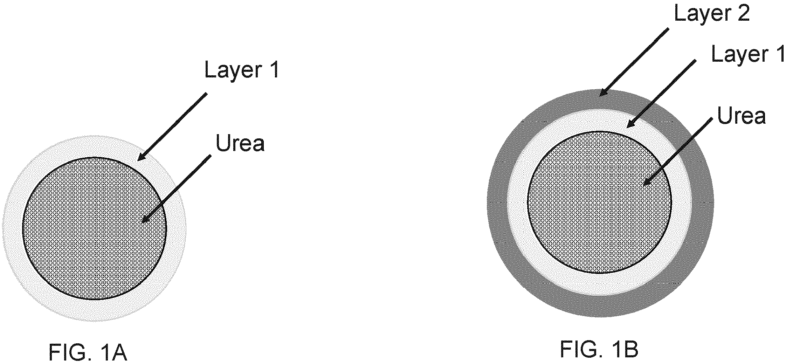

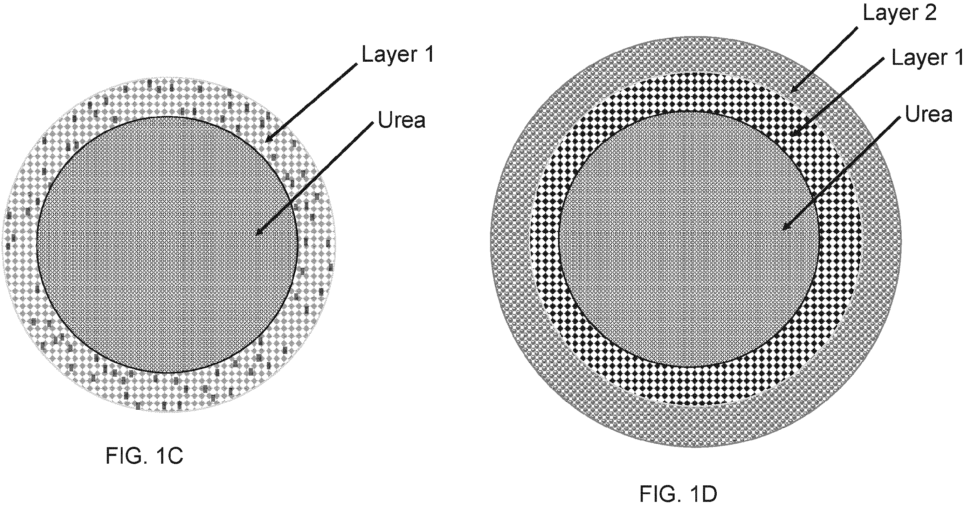

FIGS. 1A-1D are diagrams of a representative cross-section of an encapsulated or coated urea fertilizer granule according to aspects of the present disclosure.
FIGS. 2A through 2C are transmission electron microscope TEM images at 0.2 µm and 100 nm of synthesized chitosan nanoparticles.
FIG. 3 is a Fourier transform infrared spectroscopy FTIR spectrum of synthesized chitosan nanoparticles.

### SUMMARY

The present disclosure relates to a fertilizer composition comprising a nitrogen or phosphorus-based fertilizer; and a plant additive encapsulated by a polysaccharide polymer forming an encapsulated plant additive composite, wherein the plant additive comprises a macronutrient, a micronutrient, a biostimulant, a plant growth hormone, or a combination thereof, and, wherein the encapsulated plant additive composite encapsulates the nitrogen- or phosphorus-based fertilizer. The encapsulated plant additive composite that encapsulates or coats the nitrogen or phosphorus-based fertilizer may effect a prolonged release of the plant additive to a soil or foliar sample treated with the fertilizer composition.

Further aspects relate to methods of forming the fertilizer composition.

### DETAILED DESCRIPTION OF ILLUSTRATIVE EMBODIMENTS

Macronutrients such as N, P, and K are needed by plants in large quantities. Chemical fertilizers are heavily employed to improve crop growth. Synthetic chemical fertilizers are used for the optimal growth and yield of crops, however conventional agricultural practices have not been successful to improve the nutrient uptake, nutrient use efficiency, and crop yield. Since most of these nutrients are not efficiently taken up by plants, farmers tend to apply high fertilizer doses leads to low nutrient use efficiency (NUE), which negatively impacts soil, water and productivity of the crops. Synthetic fertilizers generally also have a low nutrient use efficiency. More recently, nano fertilizers (NFs) have been adopted to promote sustainable agriculture and increase crop productivity by increasing the nutrient use efficiency of crops. NFs are configured to release nutrients at a slow and steady pace, when applied either alone or in combination with synthetic/ organic fertilizers. These fertilizers can release their nutrients in 40-50 days, while synthetic fertilizers may do the same in 4-10 days.

Aspects of the present disclosure incorporate nanofertilizers which are coated or encapsulated with a nanomaterial that controls the release of nutrients according to the plant requirements and results in an increase in the NUE of crops. As such, the disclosed fertilizer compositions may be more beneficial and efficient than synthetic or chemical fertilizers for crop growth and yield. Because of their small particle size, nanofertilizers may enter plants when applied as foliar or as soil additives. Nanofertilizers may be synthesized according to the nutrient requirements of a desired crop. In conventional plant nutrient management systems, it is very difficult to control the micronutrient delivery to a specific crop, but nanofertilizers provide the opportunity to tailor nutrient amounts. For instance, most of the horticultural growing areas worldwide are deficient in certain micronutrients (for example, Zn and Fe), so nanofertilizers may be effective and efficient fortification products for crop and fresh food products. Nanofertilizers increase the bioavailability of nutrients through their high specific surface area, miniature size and high reactivity. On the other hand, by providing balanced nutrition, nanofertilizers enable the plant to combat various biotic and abiotic stresses, with overall clear advantages.

The high surface area of NFs provide a maximum reactivity and increase both the availability of nutrients and NUE. Fertilizers are encapsulated in NPs to increase their uptake and availability to plants, as well as to decrease their bulk requirements.

The use of NFs can increase the NUE of fertilizers, enhance crop yield and quality and decrease the negative effects of synthetic fertilizers in the context of more sustainable agriculture. NFs precisely release nutrients in the root zone of plants by preventing rapid changes in the chemical composition of the nutrients in the soil, which, in turn, may reduce nutrient losses. Aspects of the present disclosure feature chitosan as a biopolymeric vehicle for the delivery of plant additives or active agents, such as micronutrients, growth hormones, and bio-stimulants. Another advantage for using nanofertilizers is that they can be synthesized according to the nutrient requirements of intended crops. In conventional nutrient management system, it is very difficult to control the micronutrient delivery to a specific crop, but nanofertilizers provide the opportunity to the growers for supplying adequate amounts of nutrients.

The disclosed fertilizer compositions exploit properties of nanofertilizers and regulate the availability of nutrients in crops through slow/control release mechanisms. Such a slow delivery of nutrients is associated with the covering or cementing of nutrients with nanomaterials. By taking advantage of this slow nutrient delivery, growers can increase their crop growth because of consistently long-term delivery of nutrients to plants. Without wishing to be bound by any particular theory, the particles may be suspended in nano-dimension and may generally not be visible to naked eye but exist as suspension in water. As such, the particles may be viewed as water soluble. These nano-particles may be considered as a collection of nutrient ions which are slowly released over time from a nano-particle. In some aspect, as provided herein, nutrients may be released in a slower or more measured fashion compared to the release achieved using conventional fertilizers. Slow-release fertilizers are intended to release nutrients to plants or soil over a prolonged or extended period of time, which may be more efficient than multiple applications of conventional fertilizers. A slow release (also called a controlled or prolonged release) may minimize the frequency with which plants should be treated with a nutrient or additive package, reducing or minimizing release. In some aspects, the disclosed fertilizer compositions may exhibit a plant additive concentration after 1 day, after 7 days, after 13 days, after 21 days, after 28 days, after 60 days, after 70 days, after 80 days that is at least 20%, 25%, 30%, 35%, 40%, 45%, 50%, 55%, 58%, 60%, 65%, 70%, 75%, 80%, 85%, 90%, 95%, or 98% of a plant nutrient concentration upon initial treatment of a soil or plant with the fertilizer composition.

Provided herein is fertilizer composition comprising a nanoscale biocarrier coating and a conventional nitrogen, phosphorous, or potassium-based fertilizer (such as urea). The nanoscale bio-carrier is equipped with desired plant additives or active agents configured to improve the overall nutrient or additive use efficiency. Nanoscale may refer to an average particle size less than 1000 nm, less than 800 nm, less than 750 nm, less than 700 nm, less than 650 nm, less than 600 nm, less than 550 nm, less than 500 nm) to maintain the disclosed properties of the fertilizer composition as a nanofertilizer. Nutrient or additive use efficiency may be defined as the ratio or measure of crop nutrient or additive use to the total input of nutrient or additive added to the given crop or plant. In various aspects, the bio-carrier is a naturally derived polysaccharide polymer chitosan, known to have benefits for soil and traditionally used for soil broadcasting in its bulk form.

The nitrogen, phosphorous, or potassium-based fertilizer may comprise urea, monoammonium phosphate, or diammonium phosphate or other suitable fertilizer. The disclosed fertilizer composition may comprise the nitrogen, phosphorous, or potassium-based fertilizer in an amount of about 50 wt. % to about 99.9 wt. % based on the total weight of the fertilizer composition. According to further aspects, the nanoscale bio-carrier which may be referred to as an encapsulating polysaccharide polymer is present in an amount of from about 0.01 wt. % to 5 wt. % based on the total weight of the fertilizer composition. The plant additive or active agent may be present in an amount of from about 0.01 wt. % to about 2 wt. % based on the total weight of the fertilizer composition.

In yet further aspects, the disclosed fertilizer composition is comprised of a granulated nitrogen-based fertilizer having the plant-additive enriched polysaccharide polymer coated thereupon. That is the composition may comprise the nitrogen-based fertilizer in a granule form having the combined encapsulating chitosan and plant additive (or active agent) coated on the granules. In some aspects, the urea granules may thus be encapsulated by the chitosan and plant additive composite. The plant additive may be encapsulated by the polysaccharide polymer, thereby forming an encapsulated plant additive composite. According to various aspects of the present disclosure, the encapsulated plant additive composite may be referred to or described as a nanocomposite or encapsulated plant additive nanocomposite. Nanoparticles of the encapsulated plant additive composite may be nanoscale, have an average size of from about 20 nm to about 500 nm.

In some aspects, the encapsulating chitosan and plant additive coating may be a coating with a thickness of about 1 micrometer (µm) to about 50 µm or from about 3 µm to about 20 µm on the surface of the fertilizer granules. The fertilizer granules may be typical, having an average size distribution of about 2 mm to about 4 mm and a minimum purity of 90%, of 95%, of 98%, or of 99%.

The fertilizer compositions of the present disclosure may be effective for a number of different plants or crops, according to their needs of nutrition. In certain aspects, the polymer composite coated or encapsulated urea may be useful in treating nitrogen rich crops. These nitrogen rich crops may include, but are not limited to, legumes, cereals or grains such as maize, wheat, barley, millet, or rice.

Furthermore, the disclosed fertilizer composition may be applied at varying stages according to a given plant or crops growing stage. These fertilizer compositions may be usefully applied from the seedling stage to flowering stage or to the ripening stage and so forth. As such, the amount of fertilizer composition applied to a given plant or crop may vary according to the stage. The disclosed fertilizer composition thus enables specific tailoring for a target plant or crop's growth stage.

Furthermore, the prolonged- or extended-release capability of the fertilizer composition may be adapted for fields having multiple crops or harvesting seasons. For example, the fertilizer composition may be formulated so that multiple plant additives are incorporated into a single cache of the composition. That is, the chitosan encapsulating polymer may be configured with different plant additive encapsulants. The encapsulated plant additives may be varied within the polymer so as to be useful on different crops even having different harvesting seasons. As a further example, the coating upon the urea fertilizer may also be controlled to deliver a different amount of the encapsulated additive over time. For example, and not to be too limiting, altering the size of the encapsulating polymer nanoparticle as provided herein may result in altering the time of release of the encapsulated plant additive.

Further provided herein are adducts of the fertilizer composition comprising the nitrogen-based fertilizer and encapsulating chitosan and plant additive coating. The adducts provided as-formed, may be provided in combination with one or more other components, such as a urease inhibitor or a fertilizer composition, for example, in the form of a nitrogen source including, but not limited to, a urea source. That is, the fertilizer composition may include one or more additives. These additives may include, but are not limited to, an additional fertilizer, a soil conditioner, a micronutrient, a secondary nutrient, or an organic additive. These further additives may comprise fulvic or humic acid, for example.

### Polysaccharide Polymer

Aspects of the present disclosure comprise a nitrogen or phosphorous-based fertilizer and a polysaccharide polymer. The nitrogen or phosphorous based fertilizer may comprise granules and the polysaccharide polymer may be an encapsulating coating thereupon. In certain aspects, the polysaccharide polymer may comprise chitosan nanoparticles. Chitosan may be described herein as an amino-modified polysaccharide. The polysaccharide polymer may comprise a plant additive deposited therein. Chitosan may thus act as a bio-carrier for the plant additive.

Chitosan is a natural polymer derived from deacetylation of chitin, which may be obtained from crustaceans, insects, fungi, among other sources (Boonsongrit *et al.,* 2006). A positive effect of chitosan has observed on seed germination, growth of seedlings, roots, shoots, photosynthesis, yield and nutrient uptake (Wanichpongpan *et al.,* 2001). Chitosan nanoparticles may be formed by a physical crosslinking reaction using tri-polyphosphate TPP or a comparable crosslinking agent. The resulting Chitosan nanoparticles may possess a porous structure that makes them unique in acting as a 'house' or 'template' or 'scaffold' for plant additive nanoparticles. The porous structure may ensure integrity of plant additive nanoparticles and their gradual release into the environment for plants to use them effectively. As such, the chitosan nanoparticles and nanoscale plant additive together comprise an encapsulated plant additive composite, or a chitosan nanocomposite. The chitosan nanocomposite may encapsulate or may be a coating on a nitrogen- or phosphorus-based fertilizer such as urea granules. When applied as a soil treatment, the chitosan nanocomposite may effect a prolonged release of plant additive nanoparticles to the treated soil or leaves.

The polysaccharide polymer may be present in an amount of from about 0.01 wt. % to 2 wt. % based on the total weight of the fertilizer composition. The polysaccharide polymer encapsulating a suitable plant additive to form an encapsulated plant additive composite may be a coating on the fertilizer granules. The polysaccharide polymer itself may have a nano-scale dimension of from about 25 nanometers (nm) to about 800 nm or from about 25 nm to about 1000 nm. The coating comprising the encapsulating polysaccharide polymer and plant additive encapsulant may have a thickness of from about 1 µm to about 50 µm at a surface of the fertilizer granules. In yet further aspects, the coating may have a thickness of from about 3 µm to about 20 µm. Without wishing to be bound to any particular theory, as the polysaccharide polymer may function as a vehicle for delivery of the plant additive or active agent to a treated soil, the polysaccharide polymer may have a generally porous structure.

### Plant additive

The disclosed fertilizer composition may comprise an active agent or plant additive encapsulated in the disclosed chitosan biopolymeric vehicle. According to various aspects, a plant additive (or other active agent as described herein) may be encapsulated by a polysaccharide polymer forming an encapsulated plant additive composite. The encapsulated plant additive composite may be suitably applied as a coating to a granular urea fertilizer to provide the disclosed fertilizer composition. An active agent or plant additive may refer to a number of different nanoscale additives that may be introduced to a chitosan structure and combined with a fertilizer, such as urea, for delivery to plants. As an example, the active agent or plant additive as described herein may comprise a bio-stimulant, plant growth molecule, a micronutrient, or some combination thereof.

Bio-stimulants and/or plant growth hormones may stimulate nitrogen uptake and amino acid synthesis in plants. Plant bio-stimulants may typically fall within one of three categories: amino acid-containing products, hormone-containing products, and humic acid-containing products. Examples of plant bio-stimulants may include compositions based on seaweed extract, salicylic acid, bio-solids, humic acid, amino acids, hydrolyzed proteins, silicate, and/or synthetic compounds. According to aspects of the present disclosure, the bio-stimulant may comprise hormones such as gibberellins, which promote growth rates and increase plant size; cytokinins, which may promote plant cell division; and auxins, which may promote cell division and growth as well as stem elongation. Examples of growth hormones may further comprise indole-3-acetic acid (IAA), naphthalene acetic acid (NAA), indole butyric acid (IBA) or a combination thereof.

Generally, bio-stimulants may be produced by fermentation of microorganisms including but not limited to lactic acid bacteria and yeasts that are then killed or lysed. Suitable examples of bacteria may include, but are not limited to *Lactobacillus plantarum, Streptococcus thermophilus* (also called *Streptococcus salivarius*) and *Propionibacter freudenreichii.* Aspects further encompass various species of *Lactobaccillus, Streptococcus, and Propionibacter, Lactobacillus acidophilus, Lactobacillus buchneri, Lactobacillus johnsonii, Lactobacillus murinus, Lactobacillus paraplantarum, Lactobacillus pentosus, Lactobacillus delbrueckii, Lactococcus lactis, Leuconostoc oenos, Bifidobacter bifidus, Propionibacter shermani, Propionibacter pelophilus,* and *Propionivibrio limicola.* Useful examples of yeast may include, but are not limited to various species of *Saccharomyces,* such as *Saccharomyces pastorianus, Saccharomyces boulardii, Saccharomyces bayanus, Saccharomyces exiguous, Saccharomyces pombe,* as well as species of *Candida, Pichia, Hanseniaspora, Metschnikowia, Issatchenkia, Kluyverornyces,* and *Kloeckera.*

In further aspects, the plant additive or active agent may comprise a nano- micronutrient or macronutrient. Macronutrients may refer to essential elements such as nitrogen, phosphorus, potassium, and oxygen. Micronutrients may refer to trace minerals and may include iron, molybdenum, boron, copper, manganese, sodium, zinc, nickel, chlorine, selenium, vanadium and cobalt. Encapsulated micronutrients according to the present disclosure may comprise salts or oxides of magnesium, calcium silicon, zinc, boron, copper, titanium, or manganese, for example, in a bio-polymeric carrier and make them potentially safer for handling and usage for plants.

The plant additive or active agent may be present in an amount of from about 0.01 wt. % to about 2 wt. % based on the total weight of the fertilizer composition comprised of the chitosan vehicle with plant additive and the nitrogen or phosphorus-based fertilizer. Generally, the plant additive or active agent encapsulated by the polysaccharide polymer may be nanoscale having a size of from 20 nm to 500 nm.

The plant additive or active agent may be present from about 0.2% to 0.6% based on the total weight of the encapsulated plant additive composite or chitosan nanocomposite. It is noted that when applied in bulk form as a soil or foliar treatment, the plant additive or active agent is conventionally applied at a concentration 1%. Because of the encapsulated plant additive composite however, generally less plant additive or active agent may be applied given the prolonged or extended-release performance of the disclosed fertilizer composition. In the disclosed nanocomposite, the plant additive or active agent may be effective at a concentration of 0.5%, which is far less than the conventional 1% bulk concentration.

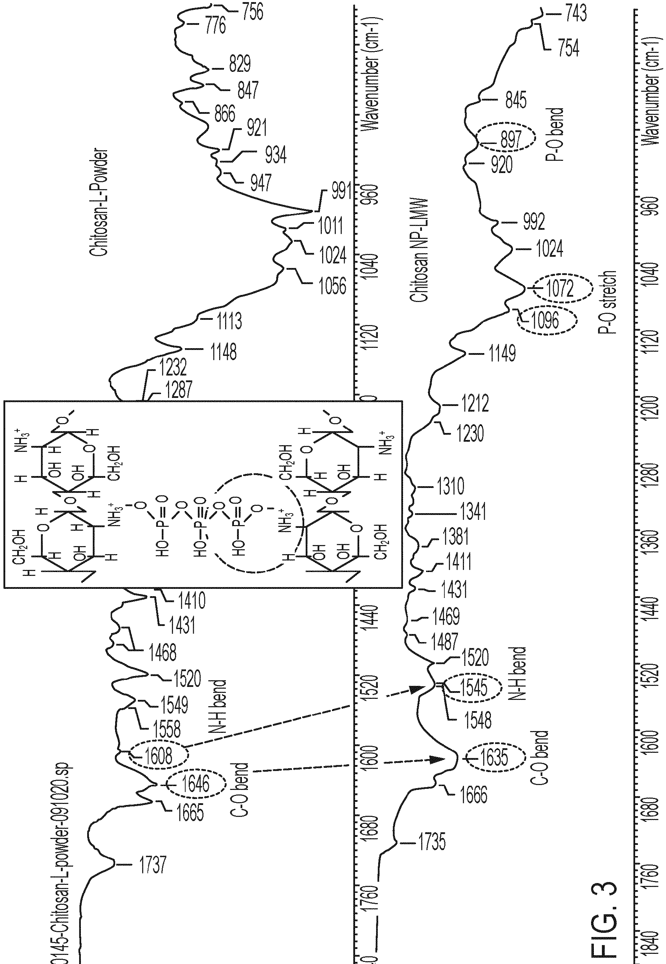

FIG. 3A presents a general configuration of a cross-section of representative encapsulated urea fertilizer granule. As shown, a urea granule may be coated or encapsulated in a first layer (Layer 1). Layer 1 may comprise a plant additive nanocomposite comprising chitosan and plant additive particles encapsulated therein. As an example, and not to be limiting, Layer 1 may have a thickness of from about 1 µm to about 50 µm. FIG. 3B shows a cross-section of an encapsulated or coated urea granule in a first layer (Layer 1) and a second layer (Layer 2). Aspects of the present disclosure may feature one or more layers as provided herein. Aspects of the present disclosure may comprise 1, 2, 3, or 4 layers and so forth. The layers may be configured in thickness such that the one or more layers have a total thickness of from about 1 µm to about 50 µm.

In various aspects, the plant additive or active agent may be varied in a single layer comprising the encapsulating polysaccharide polymer coated at urea. The plant additive or active agent may comprise a mixture of components configured to provide a blend of nutrients or hormones to a given crop or plant. As such, in certain aspects, granules of the nitrogen or phosphorus-based fertilizer may be encapsulated by one or more layers of the composite, wherein each layer of the one or more layers comprises a different plant additive encapsulant. In further aspects, a single encapsulating polysaccharide polymer may comprise a variety of plant additives rather than a single type of plant additive. For example, a coating layer comprising the encapsulating polysaccharide polymer deposited on granules of the nitrogen or phosphorus-based fertilizer may comprise a micronutrient, a macronutrient, a biostimulant, a growth hormone, or any combination thereof encapsulated therein. A representative aspect is presented in FIG. 3C featuring the cross-section of a urea granule encapsulated by Layer 1. Layer 1 of FIG. 3C may comprise a plant additive nanocomposite comprising chitosan and one or more of several types of plant additive particles encapsulated therein. As shown, Layer 1 features plant additive particles of varying sizes to represent the varying size of the plant additive nanoparticles and is purely schematic and not presented to scale.

The selection of plant additive encapsulants at different layers may also be configured to result in the release of different additives at different times. Plant additives in the one or more layers may differ across layers as well as within a given layer. A representative aspect is presented in FIG. 3D. Layer 1 may comprise a first plant additive nanocomposite comprising chitosan and a first plurality of plant additive nanoparticles encapsulated therein. Layer 2 may comprise a second plant additive nanocomposite comprising chitosan and a second plurality of plant additive nanoparticles encapsulated therein. The first and second pluralities of plant additive nanoparticles may differ according to particle size or type; for example, a micronutrient, a macronutrient, a biostimulant, a growth hormone, or any combination thereof encapsulated therein. As an example, Layer 1 may comprise a plurality of micronutrient nanoparticles while Layer 2 comprises a plurality of growth hormone nanoparticles. In yet further aspects, the one or more layers may comprise combinations of the plant additives. For example, Layer 1 may comprise a plurality of micronutrient and growth hormone nanoparticles, while Layer 2 comprises a plurality of macronutrient and micronutrient nanoparticles.

### Methods of Making

Aspects of the disclosure further relate to methods for making the disclosed fertilizer compositions. The methods may comprise first forming an encapsulating polysaccharide polymer, then encapsulating plant additive nanoparticles to form a composite coating. In further aspects, and within the scope of the present disclosure, the encapsulating polysaccharide polymer may be physically mixed with the plant additive encapsulant nanoparticles to form a composite coating. The composite coating may be applied to granules comprising a nitrogen- or phosphorus- based fertilizer.

It is desirable to maintain the particle size of the encapsulated plant additive composite within the nanoscale in order to retain the disclosed properties of the fertilizer composition as a nanofertilizer. Thus, formation of nanoparticles of the polysaccharide polymer is key. Forming nanoparticles comprising an encapsulating polysaccharide polymer may be achieved by a number of methods known in the art. Methods may include ionotropic gelation, emulsion cross-linking, emulsion-droplet coalescence, precipitation, reverse micelles, sieving, or spray drying. Yanat, Reactive and Functional Polymers, 161(2021), 104849. In a specific example, the encapsulating polysaccharide polymer may be formed via a cross-linking reaction using a suitable cross-linking agent. In certain aspects, the nanoparticles comprising the encapsulating polysaccharide polymer may be formed via the reaction of chitosan and a suitable cross-linking agent, such as tri-polyphosphate, combined under conditions effective to yield chitosan nanoparticles. The plant additive encapsulant may be introduced during the crosslinking process to provide the encapsulated plant additive composite (or nanocomposite)

For a given cross-linking reaction of chitosan, such as the formation of polysaccharide nanoparticles via ionic gelation using a crosslinking agent, various reagents or reaction conditions may be manipulated. More specifically, chitosan molecular weight, chitosan concentration, cross-linking agent concentration, chitosan to cross-linking agent molar ratio, and pH of the solution may affect size of the resulting nanoparticles. A higher molecular weight polysaccharide may provide polysaccharide polymer having a larger particle size. For example, chitosan having a molecular weight greater than 310,000 kilodaltons may provide chitosan nanoparticles with an average nanoparticle size greater than 500 nm, greater than 600 nm, greater than 700 nm, or greater than 800 nm. Accordingly, chitosan having a molecular weight less than 310,000 may provide chitosan nanoparticles with an average nanoparticle size less than 500 nm or less than 600 nm.

A higher concentration of chitosan in solution may result in larger chitosan nanoparticles formed. For example, a chitosan concentration of greater than 0.4 % (namely, 4 grams per 100 ml water), may increase the size of formed chitosan nanoparticles to greater than 500 nm, greater than 700 nm, or greater than 800 nm. Thus, in various aspects of the present disclosure, the concentration of chitosan in solution for forming chitosan nanoparticles via ionic gelation may be from about 0.1 % to about 0.4 %, or from about 0.1 % to about 0.3%. In certain aspects, the molar ratio of chitosan to a cross-linking agent such as tri-polyphosphate (TPP), may be from about 1:1 to about 3:1, or from about 1:1 to about 4:1. Finally, chitosan nanoparticles having a size of less than about 600 nm, or less than about 500 nm may be generated by maintaining the pH of the cross-linking reaction between 4 to 6, or from about 4.5 to about 5.5.

Methods of applying the composite coating to nitrogen- or phosphorus-based granules may proceed as known in the art for applying a coating to a granulated material. These may include, but are not limited to, batch-type or continuous rotary drum/pan coating, spray coating, or fluidized bed coating processes. In certain aspects, the composite coating may be applied to urea fertilizer granules via a fluidized bed coating process. Granules may be coated while being maintained in a randomly moving, fluidized condition by a stream of pressurized gas. In further aspects, the disclosed composite coating may be applied to urea fertilizer granules via a spray coating process. Granules may be sprayed with a liquid or solution comprising the composite coating and subsequently dried. The liquid or solution may be dilute, or about 0.1 % of the composite coating on urea fertilizer granules. This may correspond to about 0.1 gram of the disclosed composite (comprising chitosan and plant additive) coated on to about 100 grams of urea fertilizer. According to these methods one or more layers of the chitosan nanocomposite may be applied to the urea fertilizer granules, and as provided herein, these one or more layers may comprise varying plant additives in the chitosan plant additive nanocomposite. Varying plant additives according to different applied coating layers may enable different release rates among the plant additives. These different release rates may then be configured according to an individual plant or crop's nutrient needs.

Various combinations of elements of this disclosure are encompassed by this disclosure, for example, combinations of elements from dependent claims that depend upon the same independent claim.

### Properties/Advantages

Aspects of the present disclosure overcome conventional challenges related to application of 100% bulk form of chemical fertilizers. The disclosed fertilizer composition utilizes encapsulation of active agents such as micronutrients or bio stimulants in a bio-polymeric nanoparticle, namely chitosan, as a vehicle for their delivery to plants. Usage of such a bio-polymeric nano-carrier provides further benefits including:
- Enhanced safety aspects by creating an environment friendly nano-formulation, which avoids direct exposure to consumer/end-user farmer to nanoparticles used in the formulation.
- Chitosan polymeric nanoparticles by the virtue of their enhanced porosity act as a physical template for various ingredients to reside on urea particles without agglomeration and also, enable their slow release over time.

The fertilizer compositions of the present disclosure may establish a sustained nutrient delivery system to ensure plant health. These compositions provide a useful mechanism for sustained delivery of plant additives or active agents to treated soil. As provided herein, the disclosed fertilizer compositions exploit nanofertilizers that provide a prolonged release of plant additives or bio-stimulants to a soil sample treated with the fertilizer composition.

### ASPECTS

In various aspects, the present disclosure pertains to and includes at least the following aspects.
Aspect 1. A fertilizer composition comprising: a nitrogen or phosphorus-based fertilizer; and a plant additive encapsulated by a polysaccharide polymer forming an encapsulated plant additive composite, wherein the plant additive comprises a macronutrient, a micronutrient, a biostimulant, a plant growth hormone, or a combination thereof, and wherein the encapsulated plant additive composite encapsulates the nitrogen or phosphorus-based fertilizer.
Aspect 2. The fertilizer composition of aspect 1, wherein the plant additive is encapsulated in the polysaccharide polymer in one or more discrete layers that encapsulate the nitrogen- or phosphorus-based fertilizer.
Aspect 3. The fertilizer composition of any one of aspects 1-2, wherein a first plant additive is encapsulated by the polysaccharide polymer in a first discrete layer that encapsulates the nitrogen- or phosphorus-based fertilizer and wherein a second plant additive is encapsulated by the polysaccharide polymer in a second discrete layer that encapsulates the nitrogen- or phosphorus-based fertilizer.
Aspect 4. The fertilizer composition of any one of aspects 1-3, wherein the nitrogen- or phosphorus-based fertilizer comprises urea, monoammonium phosphate, or diammonium phosphate.
Aspect 5. The fertilizer composition of any one of aspects 1-4, wherein the plant additive has an average particle size of from about 25 nanometers (nm) to 500 nm.
Aspect 6. The fertilizer composition of any one of aspects 1-5, wherein the encapsulated plant additive composite has a size of from about 25 nm to about 500 nm.
Aspect 7. The fertilizer composition of any one of aspects 1-6, wherein the fertilizer composition affects a prolonged release of the plant additive to a crop at which the fertilizer composition has been applied as a foliar treatment.
Aspect 8. The fertilizer composition of any one of aspects 1-7, wherein the fertilizer composition affects a prolonged release of the plant additive to a crop at which the fertilizer composition has been applied as a soil treatment.
Aspect 9. The fertilizer composition of aspect 8, wherein the crop is a nitrogen-rich crop.
Aspect 10. The fertilizer composition of any one of aspects 1-9, wherein the polysaccharide polymer has a molecular weight of from about 50 kilodaltons to about 310,000 kilodaltons.
Aspect 11. The fertilizer composition of any one of aspects 1-10, wherein the polysaccharide polymer has a porous structure so as to encapsulate the plant additive.
Aspect 12. The fertilizer composition of any one of aspects 1-11, wherein the polysaccharide polymer has a nano-scale dimension in a range of 25 nm to 800 nm.
Aspect 13. The fertilizer composition of any one of aspects 1-12, wherein the polysaccharide polymer comprises an amino-modified polysaccharide.
Aspect 14. The fertilizer composition of any one of aspects 1-12, wherein the polysaccharide polymer is positively charged.
Aspect 15. The fertilizer composition of any one of aspects 1-14, wherein the polysaccharide polymer comprises chitosan.
Aspect 16. The fertilizer composition of any one of aspects 1-15, wherein the polysaccharide polymer is present in an amount of from about 0.01 wt. % to 5 wt. % based on the total weight of the fertilizer composition.
Aspect 17. The fertilizer composition of any one of aspects 1-15, wherein the plant additive is present in an amount of from about 0.01 wt. % to about 2 wt. % based on the total weight of the fertilizer composition.
Aspect 18. The fertilizer composition of any one of aspects 1-17, wherein the fertilizer composition affects a prolonged release of one or more of the macronutrient, micronutrient, biostimulant, or plant hormone to a nitrogen-rich crop.
Aspect 19. The fertilizer composition of any one of aspects 1-18, wherein the encapsulated plant additive composite comprises a micronutrient and a biostimulant.
Aspect 20. A fertilizer composition comprising: a nitrogen or phosphorus-based fertilizer; and a plant additive encapsulated by chitosan forming an encapsulated plant additive composite, wherein the plant additive comprises a macronutrient, a micronutrient, a biostimulant, a plant growth hormone, or a combination thereof, wherein the encapsulated plant additive composite comprises a coating on the nitrogen- or phosphorus-based fertilizer, and wherein the coating comprises one or more discrete layers of the encapsulated plant additive composite.
Aspect 21. A method of forming a fertilizer composition, the method comprising: affecting a crosslinking reaction of an aqueous polysaccharide and cross-linking agent to provide a polysaccharide polymer scaffold; reacting the polysaccharide polymer scaffold with a plant additive under conditions effective to form a polysaccharide nanocomposite; and coating urea granules with the polysaccharide nanocomposite to form the fertilizer composition.
Aspect 22. The method of aspect 21, wherein the aqueous polysaccharide has a concentration of about 0.1% to about 0.4%.
Aspect 23. The method of aspect 22, wherein the aqueous polysaccharide has a concentration of about 0.1% to about 0.3%
Aspect 24. The method of any one of aspects 21-3, wherein the aqueous polysaccharide and cross-linking agent are present at a molar ratio of about 1:1 to about 3:1.
Aspect 25. The method of any one of aspects 21-24, wherein the crosslinking reaction is maintained at a pH of from about 4.5 to about 5.5.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt.%.

There are numerous variations and combinations of mixing conditions, e.g., component concentrations, volumes, temperatures, pressures and other mixing ranges and conditions that can be used to optimize the product purity and yield obtained from the described process. Only reasonable and routine experimentation will be required to optimize such process conditions.

*Synthesis of Chitosan Nanoparticles using ionotropic gelation method.* Low Molecular weight chitosan (0.1%) was dissolved in an aqueous solution of 1% (w/w) acetic acid and stirred overnight at room temperature using a magnetic stirrer. The solution pH was adjusted to 5.5 using 10 N aqueous NaOH. Tri-polyphosphate (TPP) was dissolved in deionized water at a concentration of 0.5 µg/mL and filtered through the syringe filter (pore size 0.45 µm, Millipore, USA). TPP solution was added dropwise to the Chitosan solution at different initial Chitosan to TPP ratios. The reaction was carried out for 10 min, followed by centrifugation at 10,000 rpm to remove residual TPP. Finally, the obtained pellet was re-suspended into DI water and used as Chitosan NPs. Chitosan-biostimulant nanoparticles were synthesized by addition of a micronutrient solution during the cross-linking reaction of chitosan with TPP, sodium tri-polyphosphate (crosslinking agent).

Table 1 presents the preparation of chitosan nanoparticles by ion-gelation method.

**Table 1. Chitosan nanoparticle preparation.**

| | Chitosan grade (L, M, H) MW | Chitosan conc. (v/v) | TPP (v/v) | CS:TPP Molar ratio | Scale | NP formation |
|---|---|---|---|---|---|---|
| 1 | LMW | 0.1% | 1% | 1:1 | 25 mL | Yes |
| 2 | MMW | 0.1% | 1% | 1:1 | 25 mL | Yes |
| 3 | HMW | 0.1% | 1% | 1:1 | 25 mL | Yes |
| 4 | LMW (repeat of 1) | 0.1% | 1% | 1:1 | 500 mL | Yes |
| 5 | LMQ | 0.1% | 0.1% | 3:1 | 500 mL | Yes |

"L" refers to low molecular weight, namely a molecular MW of 50 to 190 kilodaltons KDa, greater than 75% deacetylated. "M" refers to medium MW of 190 to 310 kDa, greater than 75% deacetylated. "H" refers to high MW of 310000-375000 kDa, greater than 75% deacety lated.

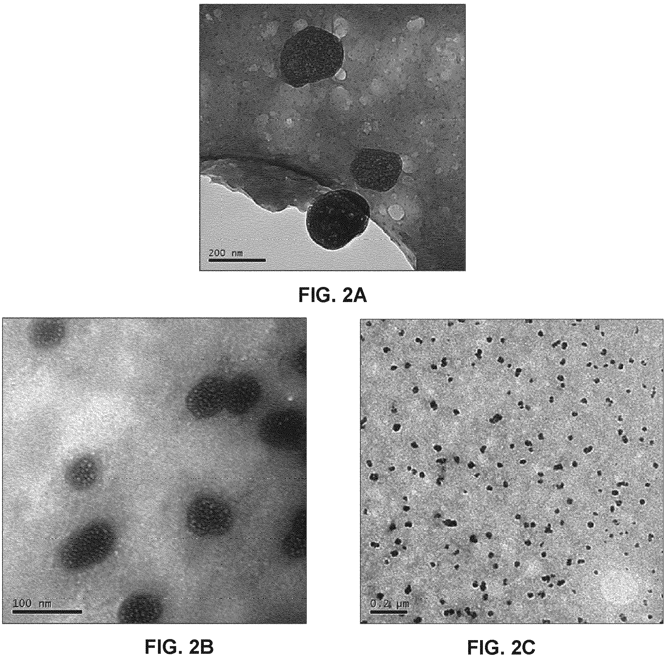

Chitosan nanoparticles synthesized were characterized by transmission electron microscope TEM (FIGS. 2A-2C) at 0.2 µm and 100 nm as well as Fourier-transform infrared spectroscopy FTIR (FIG. 3) which showed a size ranging between 50-200 nm with indication of porous structure. Qualitative confirmation of porosity for chitosan nanoparticles was determined from the TEM/SEM images where particles are assembled together into a sphere creating gaps/pores in the process.

Any publications mentioned herein are incorporated herein by reference to disclose and describe the methods and/or materials in connection with which the publications are cited.

It is also to be understood that the terminology used herein is for the purpose of describing particular aspects only and is not intended to be limiting. As used in the specification and in the claims, the term "comprising" may include the aspects or aspects "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "biostimulant" or a "micronutrient" includes mixtures of two or more such bio-stimulants or micronutrients.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit falling within a range between two particular units are also disclosed. For example, if 10 and 15 are disclosed, then 11, 12, 13, and 14 are also disclosed.

As used herein, the terms "optional" or "optionally" mean that the subsequently described event, condition, component, or circumstance may or may not occur, and that the description includes instances where said event or circumstance occurs and instances where it does not.

As used herein, "plant" may refer to refer to any part of a plant (e.g., roots, foliage, shoot) as well as trees, shrubbery, flowers, and grasses. "Seed' is intended to include seeds, tubers, tuber pieces, bulbs, etc., or parts thereof from which a plant is grown. As also used herein the term "water-insoluble' shall mean that less than 0.001% by weight of the compound is soluble in water.

As used herein, the term or phrase "effective," "effective amount," or "conditions effective to" refers to such amount or condition that is capable of performing the function or property for which an effective amount is expressed. As will be pointed out below, the exact amount or particular condition required may vary from one aspect or aspect to another, depending on recognized variables such as the materials employed and the processing conditions observed. Thus, it is not always possible to specify an exact "effective amount" or "condition effective to" for each aspect or aspect encompassed by the present disclosure. However, it should be understood that an appropriate effective amount or condition effective to achieve a desired results will be readily determined by one of ordinary skill in the art using only routine experimentation.

Disclosed are the components to be used to prepare disclosed compositions of the invention as well as the compositions themselves to be used within methods disclosed herein. These and other materials are disclosed herein, and it is understood that when combinations, subsets, interactions, groups, etc. of these materials are disclosed that while specific reference of each various individual and collective combinations and permutation cannot be explicitly disclosed, each is specifically contemplated and described herein. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular component in a composition or article, denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included. For example if a particular element or component in a composition or article is said to have 8% weight, it is understood that this percentage is relation to a total compositional percentage of 100%.

Each of the component starting materials disclosed herein are either commercially available and/or the methods for the production thereof are known to those of skill in the art.

It will be apparent to those skilled in the art that various modifications and variations can be made in the present disclosure without departing from the scope or spirit of the invention. Other aspects of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A fertilizer composition comprising:
a nitrogen or phosphorus-based fertilizer; and
a plant additive encapsulated by a polysaccharide polymer forming an encapsulated plant additive composite,
wherein the plant additive comprises a macronutrient, a micronutrient, a biostimulant, a plant growth hormone, or a combination thereof, and
wherein the encapsulated plant additive composite encapsulates the nitrogen or phosphorus-based fertilizer.

2. The fertilizer composition of claim 1, wherein the plant additive is encapsulated in the polysaccharide polymer in one or more discrete layers that encapsulate the nitrogen- or phosphorus-based fertilizer.

3. The fertilizer composition of any one of claims 1-2, wherein a first plant additive is encapsulated by the polysaccharide polymer in a first discrete layer that encapsulates the nitrogen- or phosphorus-based fertilizer and wherein a second plant additive is encapsulated by the polysaccharide polymer in a second discrete layer that encapsulates the nitrogen- or phosphorus-based fertilizer.

4. The fertilizer composition of any one of claims 1-3, wherein the nitrogen- or phosphorus-based fertilizer comprises urea, monoammonium phosphate, or diammonium phosphate.

5. The fertilizer composition of any one of claims 1-5, wherein the encapsulated plant additive composite has a size of from about 25 nm to about 500 nm.

6. The fertilizer composition of any one of claims 1-6, wherein the fertilizer composition affects a prolonged release of the plant additive to a crop at which the fertilizer composition has been applied as a foliar treatment.

7. The fertilizer composition of any one of claims 1-7, wherein the fertilizer composition affects a prolonged release of the plant additive to a crop at which the fertilizer composition has been applied as a soil treatment.

8. The fertilizer composition of claim 8, wherein the crop is a nitrogen-rich crop.

9. The fertilizer composition of any one of claims 1-9, wherein the polysaccharide polymer has a molecular weight of from about 50 kilodaltons to about 310,000 kilodaltons.

10. The fertilizer composition of any one of claims 1-10, wherein the polysaccharide polymer has a porous structure so as to encapsulate the plant additive.

11. The fertilizer composition of any one of claims 1-11, wherein the polysaccharide polymer has a nano-scale dimension in a range of 25 nm to 800 nm.

12. The fertilizer composition of any one of claims 1-12, wherein the polysaccharide polymer comprises an amino-modified polysaccharide.

13. The fertilizer composition of any one of claims 1-12, wherein the polysaccharide polymer is positively charged.

14. The fertilizer composition of any one of claims 1-14, wherein the polysaccharide polymer comprises chitosan.

15. The fertilizer composition of any one of claims 1-15, wherein the polysaccharide polymer is present in an amount of from about 0.01 wt. % to 5 wt. % based on the total weight of the fertilizer composition.

16. The fertilizer composition of any one of claims 1-15, wherein the plant additive is present in an amount of from about 0.01 wt. % to about 2 wt. % based on the total weight of the fertilizer composition.

17. The fertilizer composition of any one of claims 1-17, wherein the fertilizer composition affects a prolonged release of one or more of the macronutrient, micronutrient, biostimulant, or plant hormone to a nitrogen-rich crop.

18. The fertilizer composition of any one of claims 1-18, wherein the encapsulated plant additive composite comprises a micronutrient and a biostimulant.

19. A fertilizer composition comprising:
a nitrogen or phosphorus-based fertilizer; and
a plant additive encapsulated by chitosan forming an encapsulated plant additive composite,
wherein the plant additive comprises a macronutrient, a micronutrient, a biostimulant, a plant growth hormone, or a combination thereof,
wherein the encapsulated plant additive composite comprises a coating on the nitrogen- or phosphorus-based fertilizer, and
wherein the coating comprises one or more discrete layers of the encapsulated plant additive composite.

20. A method of forming a fertilizer composition, the method comprising:
affecting a crosslinking reaction of an aqueous polysaccharide and cross-linking agent to provide a polysaccharide polymer scaffold;
reacting the polysaccharide polymer scaffold with a plant additive under conditions effective to form a polysaccharide nanocomposite; and
coating urea granules with the polysaccharide nanocomposite to form the fertilizer composition.
